# FASCICULE DE BREVET EUROPEEN

(11) **EP 1 069 660 B1**
(45) Date de publication et mention de la délivrance du brevet: **14.11.2007**
(21) Numéro de dépôt: 00410065.7
(22) Date de dépôt: 19.06.2000
(51) Int. Cl.: H02B 1/26

(54) **Dispositif d'assemblage à cliquet rotatif pour appareillage électrique modulaire**
Befestigungsvorrichtung mit drehbarer Raste für modulare, elektrische Geräte
Fastening device with rotating latch for modular electrical appliances

(30) Priorité: 15.07.1999 FR 9909361
(43) Date de publication de la demande: 17.01.2001
(73) Titulaire: SCHNEIDER ELECTRIC INDUSTRIES SAS, 92500 Rueil-Malmaison (FR)
(72) Inventeur: Bellin, Laurent, Schneider Electric Industries SA, 38050 Grenoble cedex 09 (FR); Burnot, Claude, Schneider Electric Industries SA, 38050 Grenoble cedex 09 (FR); Michelot, Christophe, Schneider Electric Ind. SA, 38050 Grenoble cedex 09 (FR)
(74) Mandataire: Ritzenthaler, Jacques

(56) Documents cités:
- DE-A- 4 403 585
- FR-A- 2 616 582

## Description

### Domaine technique de l'invention

L'invention est relative à un dispositif d'assemblage de deux appareils électriques à boîtiers isolants disposés côte à côte, comprenant un cavalier d'encliquetage conformé en cliquet rotatif en matière plastique moulée, ayant un axe d'articulation et un bec d'emboîtement.

Un bloc différentiel adaptable à un bloc disjoncteur utilise de manière classique un tel cavalier rotatif qu'il suffit de faire pivoter d'un quart de tour dans un sens donné pour accrocher les deux blocs l'un à l'autre. Le démontage s'effectue en faisant pivoter le cavalier en sens inverse, et en déconnectant les conducteurs de liaison. Le bloc différentiel peut ensuite être réutilisé avec le même bloc disjoncteur, ou avec un autre disjoncteur ayant le même nombre de pôles.

Dans ce dernier cas, la réutilisation du bloc différentiel adaptable peut causer des problèmes de déclassements thermiques du disjoncteur. En effet, dans un disjoncteur différentiel, la protection thermique contre les surcharges est réglée en usine en tenant compte des échauffements des câbles ainsi que de la propre dissipation thermique de l'appareil. Cette dissipation thermique par effet Joule est due aux résistances internes et s'évacue par les faces extérieures en contact avec l'air ambiant ainsi que par les câbles d'alimentation. Lors de l'adaptation du bloc différentiel ou de tout autre auxiliaire, l'équilibre des échanges thermiques du disjoncteur est modifié en raison de la réduction des surfaces d'échange avec l'air ambiant et de la dissipation thermique propre à l'auxiliaire. En raison de ces modifications d'équilibre, le disjoncteur déclenche plus tôt en surcharge et doit être déclassé en calibre pour continuer à assurer la protection prévue.

L'absence de trace visible sur le boîtier du disjoncteur après le démontage du bloc différentiel peut ainsi être la cause d'un problème de déclassement thermique.

### Etat de la technique

Le document DE 4403585 décrit un dispositif d'assemblage de deux appareils électriques à boîtiers isolants disposés côte à côte. Il comprend un cavalier d'encliquetage conformé en cliquet rotatif en matière plastique moulée ayant une première partie reliée par un pont de liaison de section rétrécie à une deuxième partie équipée d'un crochet de verrouillage. Le pont de liaison est cassable pour séparer les deux parties l'une de l'autre, de telle manière que la deuxième partie indémontable du cavalier d'encliquetage représente sur l'un des appareils une trace visible de démontage de l'autre appareil.
Le montage imperdable du cavalier d'encliquetage après brisure de la partie cassable empêche néanmoins tout accouplement ultérieur des appareils

### Objet de l'invention

L'objet de l'invention consiste à réaliser un dispositif à cavalier d'assemblage laissant une trace en cas de démontage de l'un des appareils, et permettant de réutiliser les appareils pour une autre adaptation.

Le dispositif selon l'invention est caractérisé en ce que la première partie est composée d'un axe d'articulation articulé à l'un des appareils, et d'un bec d'emboîtement destiné à pénétrer avec un crochet de verrouillage dans des orifices de l'autre appareil, la brisure du pont de liaison autorisant le bec d'emboîtement à constituer un autre accouplement..

Selon un premier mode de réalisation de l'invention, le crochet de verrouillage du cavalier est solidarisé à la deuxième partie, de manière à rester ancré en permanence à l'autre appareil après avoir cassé le pont de liaison.

Selon un deuxième mode de réalisation de l'invention, le crochet de verrouillage fait partie avec le bec d'emboîtement de la première partie du cavalier, la trace visible de démontage se trouvant sur le cavalier après enlèvement de la deuxième partie.

### Description sommaire des dessins

Les avantages et caractéristiques de l'invention ressortiront plus clairement de la description qui va suivre d'un mode de réalisation de l'invention donné à titre d'exemple non limitatif, et représenté aux dessins annexés, dans lesquels:
- la figure 1 est une vue en perspective d'un disjoncteur différentiel modulaire composé d'un bloc différentiel adaptable à un bloc disjoncteur au moyen d'un dispositif d'assemblage selon l'invention ;
- la figure 2 montre une vue à échelle agrandie du cavalier d'assemblage de la figure 1 ;
- la figure 3 est une vue différente du cavalier de la figure 2 ;
- les figures 4 à 6 représentent les étapes successives de démontage du cavalier d'assemblage;
- la figure 7 est une vue en perspective d'une variante de réalisation du cavalier d'assemblage;
- la figure 8 est une vue de dessous de la figure 7;
- la figure 9 est une vue de profil de la figure 7.

### Description de modes de réalisations préférentiels

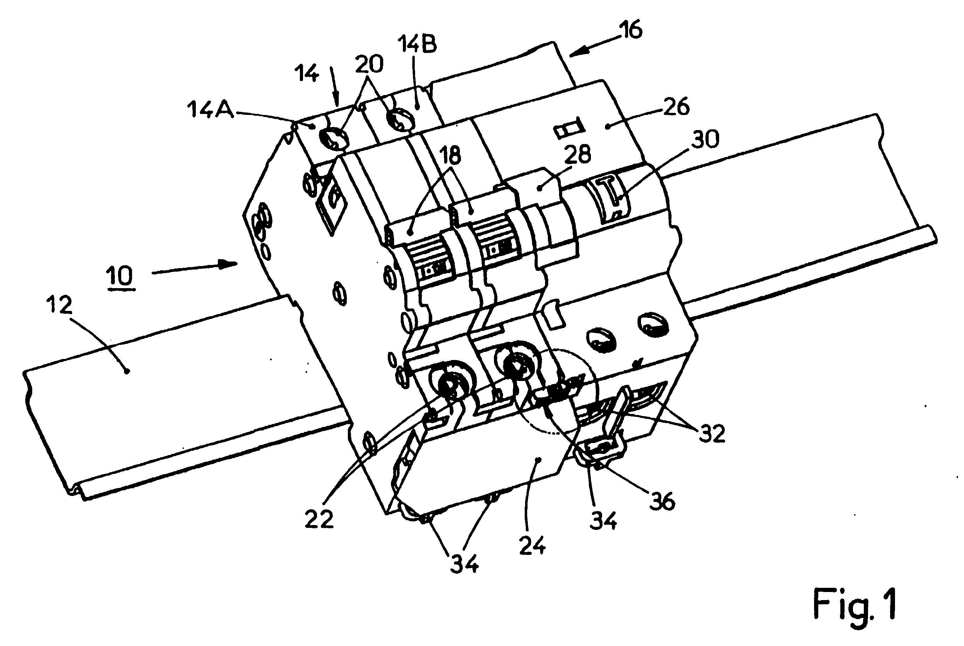

En référence à la figure 1, un disjoncteur différentiel 10 modulaire est monté sur un rail de fixation 12, et est composé d'un bloc disjoncteur 14 multipolaire accolé et accouplé mécaniquement à un bloc différentiel 16 adaptable ayant le même nombre de pôles. Le bloc disjoncteur 14 comporte des modules à boîtiers 14A, 14B isolants, comprenant chacun une manette 18, une borne d'entrée 20, et une borne de raccordement 22. Un cache-bornes 24 est associé aux bornes de raccordement 22 du côté des petites faces latérales en autorisant l'accès aux vis de serrage. Le bloc différentiel 16 est logé dans une enveloppe 26 isolante accolée à droite à la grande face latérale du boîtier 14B, et comprenant une manette 28, un bouton test 30, et des bornes de départ 32. La connexion électrique entre le bloc disjoncteur 14 et le bloc différentiel 16 s'opère au moyen de conducteurs de liaison (non représentés) raccordés aux bornes de raccordement 22. Le disjoncteur différentiel 10 est fixé sur le rail 12 par des verrous 34 de fixation.

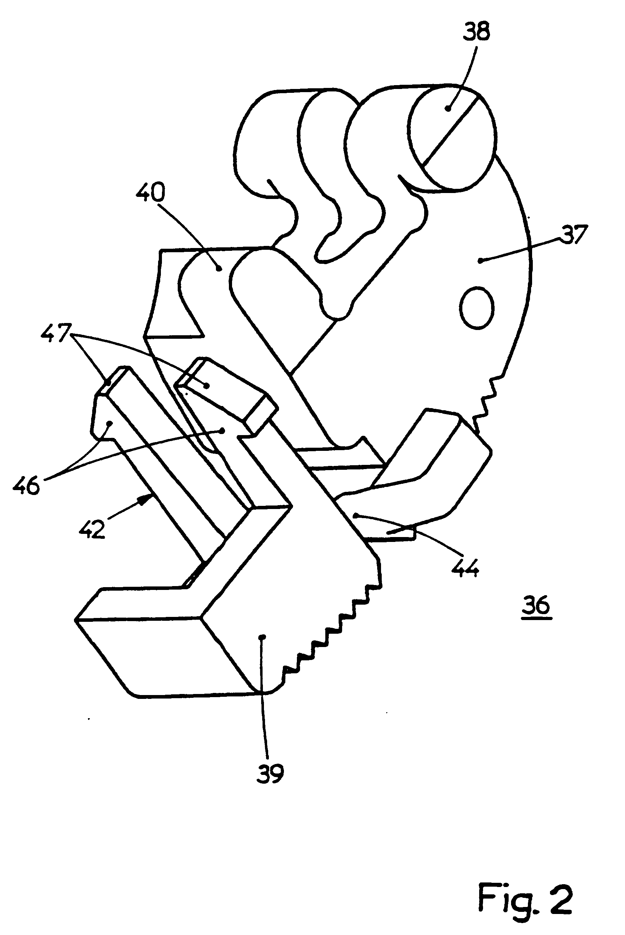

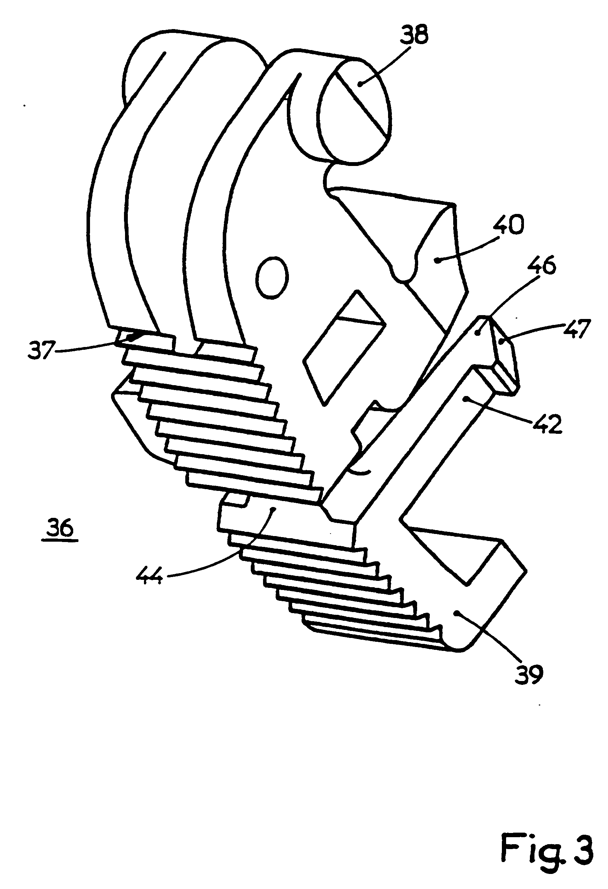

L'assemblage mécanique entre les deux blocs 14, 16 est assuré au moyen d'un cavalier d'encliquetage 36 représenté en détail aux figures 2 et 3. Le cavalier d'encliquetage 36 est conformé en cliquet rotatif en matière plastique moulée, comportant une première partie 37 équipée d'un axe d'articulation 38 et d'un bec d'emboîtement 40, et une deuxième partie 39 portant un crochet de verrouillage 42 à l'extrémité opposée de l'axe d'articulation 38. Le bec d'emboîtement 40 et le crochet de verrouillage 42 des deux parties 37, 39 sont réunis l'un de l'autre par un pont de liaison 44 de section rétrécie constituant un élément cassable agencé dans la partie intermédiaire du cavalier. Le bec d'emboîtement 40 s'étend orthogonalement par rapport à l'axe d'articulation 38 en présentant un profil en came. Le crochet de verrouillage 42 est doté d'une fourche en U dont les branches élastiques sont terminées par des ergots d'accrochage 46 dirigés en sens inverse dans la direction de l'axe d'articulation 38. Chaque ergot d'accrochage 46 est pourvu d'une surface d'appui 47 taillée en biseau, facilitant l'insertion de la fourche lors de l'opération d'assemblage. La face extérieure des deux parties 37, 39 du cavalier d'encliquetage 36 est striée.

Pour la mise en place du cavalier d'encliquetage 36, l'axe d'articulation 38 est introduit dans des paliers (non représentés) prévus dans un logement 48 de l'enveloppe 26 du bloc différentiel 16. L'assemblage au bloc disjoncteur 14 intervient en faisant pivoter le cavalier 36 dans le sens horaire, provoquant l'entrée du bec d'emboîtement 40 et du crochet de verrouillage 42 dans des orifices du module 14B du bloc disjoncteur 14. En position assemblée (figure 1), le cavalier 36 constitue un cliquet à verrouillage positif, le crochet de verrouillage 42 étant indémontable grâce aux ergots d'accrochage 46 anti-retour de la fourche.

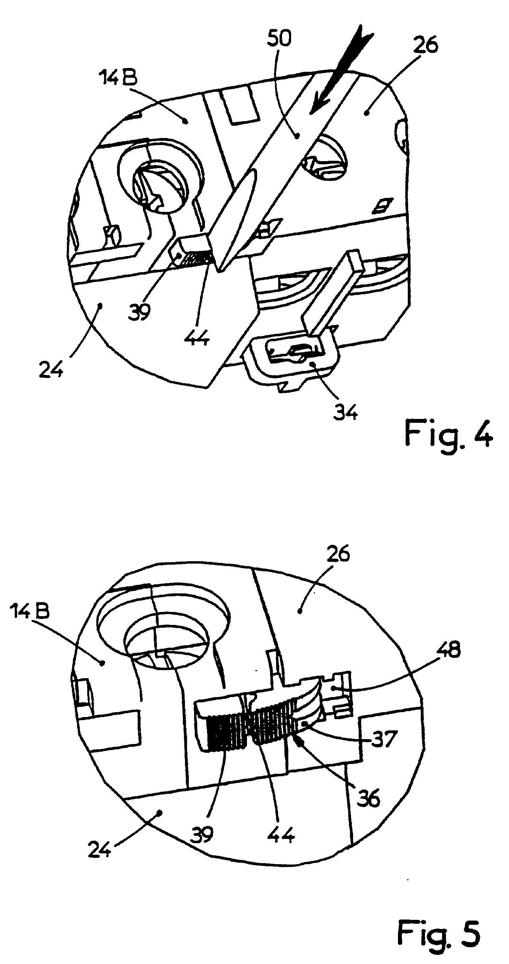

Le démontage du bloc différentiel 16 reste néanmoins possible, mais nécessite de casser le pont de liaison 44 de section rétrécie du cavalier d'encliquetage 36 au moyen d'un tournevis 50 (figure 4).

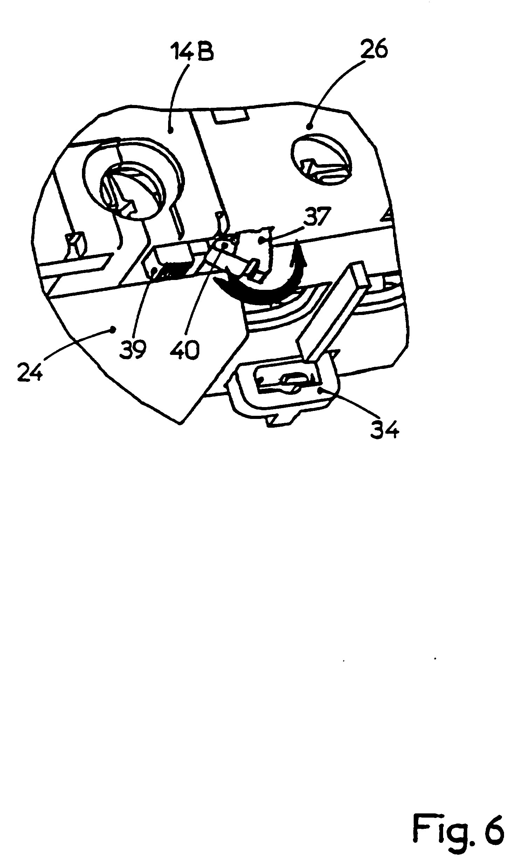

Sur la figure 5, le pont de liaison 44 est brisé séparant les deux parties 37, 39 du cavalier d'encliquetage 36 l'une de l'autre. La première partie 37 est libérée, et peut pivoter dans le sens inverse des aiguilles d'une montre vers une position de déverrouillage (figure 6) provoquant le retrait du bec d'emboîtement 40 et autorisant la séparation du bloc différentiel 16 après déconnexion des conducteurs électriques de raccordement. La deuxième partie 39 reste ancrée en permanence au bloc disjoncteur 14 grâce aux ergots d'accrochage 46 anti-retour.

La présence de la deuxième partie 39 sur le bloc disjoncteur 14 constitue une trace visible de démontage du bloc différentiel 16. Ce dernier pourra néanmoins être réutilisé en l'accouplant au bloc disjoncteur 14, mais cette deuxième adaptation est facilement vérifiable par scrutation de la brisure du pont de liaison 44.

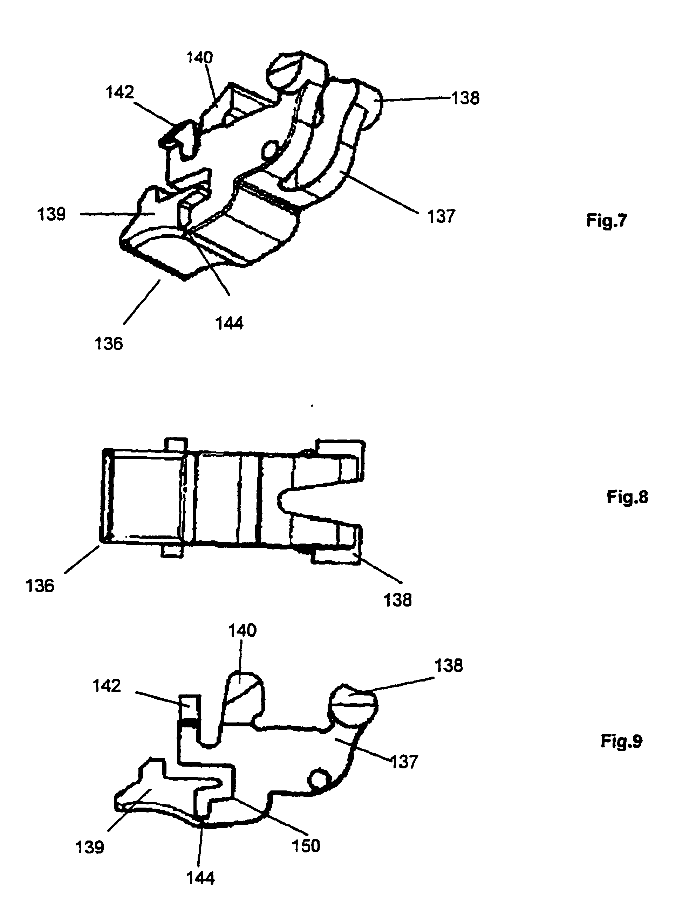

Sur les figures 7 à 9, le cavalier 136 comporte une première partie 137 équipée d'un axe d'articulation 138, du bec d'emboîtement 140, et du crochet de verrouillage 142. La deuxième partie 139 est jetée après brisure du pont de liaison 144, et la trace visible se trouve sur le cavalier 136. Il suffit d'agir sur une entaille 150 de la première partie 137 pour désaccoupler les deux appareils, et de pousser sur la base du cavalier 136 pour effectuer une deuxième adaptation.

Il est clair que le cavalier d'encliquetage 36, 136 peut être utilisé pour tout autre assemblage d'appareils électriques modulaires.

## Revendications

1. Dispositif d'assemblage de deux appareils électriques à boîtiers isolants disposés côte à côte, comprenant un cavalier d'encliquetage (36, 136) conformé en cliquet rotatif en matière plastique moulée ayant une première partie (37, 137) reliée par un pont de liaison (44, 144) de section rétrécie à une deuxième partie (39, 139), ledit pont de liaison étant cassable pour séparer les deux parties (37, 39; 137, 139), l'une de l'autre en laissant une trace visible de démontage de l'autre appareil,
**caractérisé en ce que** la première partie (37, 137) est composée d'un axe d'articulation (38, 138) articulé à l'un des appareils, et d'un bec d'emboîtement (40, 140) destiné à pénétrer avec un crochet de verrouillage (42, 142) dans des orifices de l'autre appareil, la brisure du pont de liaison (44, 144) autorisant le bec d'emboîtement (40, 140) à constituer un autre accouplement.

2. Dispositif d'assemblage selon la revendication 1, **caractérisé en ce que** le crochet de verrouillage (42, 142) est doté d'une fourche à branches élastiques terminées par des ergots d'accrochage (46) pour constituer ledit cliquet.

3. Dispositif d'assemblage selon la revendication 2, **caractérisé en ce que** chaque ergot d'accrochage (46) est pourvu d'une surface d'appui (47) taillée en biseau facilitant l'insertion de la fourche lors de l'assemblage des deux appareils.

4. Dispositif d'assemblage selon la revendication 1, **caractérisé en ce que** le crochet de verrouillage (42) du cavalier (36) est solidarisé à la deuxième partie (39), de manière à rester ancré en permanence à l'autre appareil après avoir cassé le pont de liaison (44).

5. Dispositif d'assemblage selon la revendication 1, **caractérisé en ce que** le crochet de verrouillage (142) fait partie avec le bec d'emboîtement (140) de la première partie (137) du cavalier (136), la trace visible de démontage se trouvant sur le cavalier (136) après enlèvement de la deuxième partie (139).

6. Dispositif d'assemblage selon l'une des revendications précédentes, **caractérisé en ce que** l'un des appareils est un bloc disjoncteur (14), et l'autre appareil un bloc différentiel (16) de manière à constituer un disjoncteur différentiel modulaire.

## Claims

1. An assembly device for assembling two electrical apparatuses with insulating cases arranged side by side, comprising an assembly link (36, 136) in the form of a rotary catch made of moulded plastic material having a first part (37, 137) connected by a connecting bridge (44, 144) of reduced cross-section to a second part (39, 139), said connecting bridge being breakable to separate the two parts (37, 39; 137, 139) from one another leaving a visible trace of disassembly of the other apparatus,
**characterized in that** the first part (37, 137) is composed of an articulation spindle (38, 138) articulated on one of the apparatuses and of an engagement nose (40, 140) designed to be inserted with a securing latch (42, 142) in orifices of the other apparatus, breaking of the connecting bridge (44, 144) enabling the engagement nose (40, 140) to constitute another coupling.

2. The assembly device according to claim 1, **characterized in that** the securing latch (42, 142) is equipped with a fork with flexible branches terminated by latching splines (46) to constitute said catch.

3. The assembly device according to claim 2, **characterized in that** each latching spline (46) is provided with a bevelled bearing surface (47) for ease of insertion of the fork when assembly of the two apparatuses is performed.

4. The assembly device according to claim 1, **characterized in that** the securing latch (42) of the assembly link (36) is securedly affixed to the second part (39) so as to remain permanently secured to the other apparatus after the connecting bridge (44) has been broken.

5. The assembly device according to claim 1, **characterized in that** the securing latch (142) forms part with the engagement nose (140) of the first part (137) of the assembly link (136), the visible trace of disassembly being located on the assembly link (136) after the second part (139) has been removed.

6. The assembly device according to one of the foregoing claims, **characterized in that** one of the apparatuses is a circuit breaker unit (14) and the other apparatus is a differential, unit (16) so as to constitute a modular differential circuit breaker.

## Patentansprüche

1. Vorrichtung zur Kombination von zwei aneinander gereihten, elektrischen Schaltgeräten mit Isolierstoffgehäuse, die ein als Drehklinke ausgebildetes Verbindungselement (36, 136) umfasst, welche Drehklinke als Kunststoff-Formteil ausgebildet ist und einen ersten Abschnitt (37, 137) aufweist, der über einen Verbindungssteg (44, 144) kleineren Querschnitts mit einem zweiten Abschnitt (39, 139) verbunden ist, wobei der genannte Verbindungssteg durchbrochen werden kann, um die beiden Abschnitte (37, 39; 137, 139) voneinander zu trennen, und dabei ein sichtbares Kennzeichen der erfolgten Abtrennung des anderen Schaltgeräte erkennbar bleibt,
**dadurch gekennzeichnet, dass** der erste Abschnitt (37, 137) eine Drehachse (38, 138), die an eines der Schaltgeräte angelenkt ist, sowie einen Eingriffzapfen (40, 140) umfasst, der dazu dient, zusammen mit einem Rasthaken (42, 142) in Öffnungen des anderen Schaltgeräts einzugreifen, wobei der Eingriffzapfen (40, 140) nach dem Durchbrechen des Verbindungsstegs (44, 144) für eine erneute Kombination verwendet werden kann.

2. Kombinationsvörrichtung nach Anspruch 1, **dadurch gekennzeichnet, dass** der Rasthaken (42, 142) eine Gabel mit elastischen Schenkeln aufweist, an deren Enden Rastvorsprünge (46) zur Bildung der genannten Klinke ausgebildet sind.

3. Kombinationsvorrichtung nach Anspruch 2, **dadurch gekennzeichnet, dass** jeder Rastvorsprung (46) eine geneigte Stützfläche (47) aufweist, um bei der Kombination der beiden Schaltgeräte die Einführung der Gabel zu erleichtern.

4. Kombinationsvorrichtung nach Anspruch 1, **dadurch gekennzeichnet, dass** der Rasthaken (42) des Verbindungselements (36) fest mit dem zweiten Abschnitt (39) verbunden ist, derart dass er nach dem Durchbrechen des Verbindungsstegs (44) dauerhaft in dem anderen Schaltgerät verbleibt.

5. Kombinationsvorrichtung nach Anspruch 1, **dadurch gekennzeichnet, dass** der Rasthaken (142) zusammen mit dem Eingriffzapfen (140) im ersten Abschnitt (137) des Verbindungselements (136) ausgebildet ist, wobei sich das sichtbare Kennzeichen der durchbrochenen Verbindung nach dem Entfernen des zweiten Abschnitts (139) am Verbindungselement (136) befindet.

6. Kombinationsvorrichtung nach irgendeinem der vorhergehenden Ansprüche, **dadurch gekennzeichnet, dass** eines der Schaltgeräte ein Leitungsschutzschalter (14) und das andere Schaltgerät ein Fehlerstromschutzmodul (16) ist, derart dass die Anordnung einen FI/LS-Schalter in Modulbauweise bildet.
